# EUROPÄISCHE PATENTSCHRIFT

(11) **EP 1 491 789 B1**
(45) Veröffentlichungstag und Bekanntmachung des Hinweises auf die Patenterteilung: **25.04.2007**
(21) Anmeldenummer: 04010423.4
(22) Anmeldetag: 03.05.2004
(51) Int. Cl.: F16D 65/097

(54) **Bremsbelag für eine Scheibenbremse**
Brake pad for a disc brake
Plaquette de frein pour frein à disque

(30) Priorität: 24.06.2003 DE 10328194
(43) Veröffentlichungstag der Anmeldung: 29.12.2004
(73) Patentinhaber: Hermann Peters GmbH & Co., 58256 Ennepetal (DE)
(72) Erfinder: Mois, Peter, 58256 Ennepetal (DE); Greven, Franz, 58256 Ennepetal (DE); Weise, Bernd, 45527 Hattingen (DE)
(74) Vertreter: Becker, Thomas

(56) Entgegenhaltungen:
- EP-A- 0 877 176
- EP-B- 0 534 987
- DE-A1- 10 026 547
- DE-U1- 8 615 015

## Beschreibung

Die Erfindung betrifft einen Bremsbelag für eine Scheibenbremse. Ein solcher Bremsbelag besteht aus einer Tragplatte und einem darauf angeordneten Reibbelag.

Die Bremsbeläge werden in Belagschächten abgestützt und für eine Bewegung senkrecht zur Ebene einer zugehörigen Bremsscheibe geführt.

Bei großflächigen Bremsbelägen, wie sie insbesondere für schwere Nutzfahrzeuge eingesetzt werden, wird häufig eine sogenannte Druckverteilerplatte parallel zum Bremsbelag vorgesehen. Die Druckverteilerplatte hat im wesentlichen die gleichen Abmessungen wie der Bremsbelag und wird im Wesentlichen auf gleiche Weise abgestützt und geführt, sodass im Rahmen der Erfindung der Begriff "Bremsbelag" eine solche Druckverteilerplatte mit einschließt.

Zur sicheren Positionierung der Bremsbeläge in zugehörigen Bremsschächten ist es bekannt (DE 86 15 015 U1; EP 0 534 987 B1), entlang einer in der Montageposition oberen (also radial außen liegenden) Außenfläche der Tragplatte eine Blattfeder anzuordnen, die relativ zur Außenfläche der Tragplatte gewölbt ist.

Diese Blattfeder, die sich im montierten Zustand des Bremsbelages gegen einen gehäuseseitigen, lösbaren Niederhalter abstützt, hat den Zweck, den Bremsbelag auch bei starken Beschleunigungen und/oder Krafteinwirkungen sicher im Belagschacht zu halten.

Nach der DE 86 15 015 U1 ist die Blattfeder endseitig schlaufenartig umgebogen und stützt sich mit diesen Enden in korrespondierend geformten Ausnehmungen im Bereich der Außenfläche der Tragplatte ab. Dabei steht die Feder bereits im Einbauzustand, aber ohne Anlage gegen den Niederhalter, unter Vorspannung.
Bei der Montage kann es zu einem Verrutschen der Blattfeder kommen, die dann unkontrolliert aus ihrer Führung ausbricht und zu Verletzungen führen kann.

Um diesen Nachteil zu vermeiden, schlägt die EP 0 534 987 B1 vor, die Blattfeder nicht unter (Druck) Vorspannung endseitig zu lagern, sondern die freien Enden der Blattfeder mit Ausnehmungen auszubilden und die Blattfeder unter Druck (Vorspannung) auf Haltelaschen im Bereich der radial außen liegenden Außenfläche der Tragplatte zu setzen, sodass die Haltelaschen die Ausnehmungen durchgreifen und die Blattfeder anschließend unter Zug (Vorspannung) an den Außenkanten der Haltelaschen gehalten wird, wozu die Haltelaschen entsprechende Hinterschneidungen aufweisen.

Auch dieser Vorschlag weist jedoch verschiedene Nachteile auf. Zum einen ist es relativ schwierig, die Blattfeder zunächst so gegen ihre Federspannung aufzuweiten, dass sie über die Haltelaschen geführt werden kann. Dabei besteht die zusätzliche Gefahr, dass die Ausnehmungen der Blattfeder nicht vollständig in den Bereich der genannten Hinterschneidungen geführt werden, sodass sich die Blattfeder anschließend wieder selbsttätig lösen kann, sodass auch hier, wie bei der Ausführungsform gemäß DE 86 15 015 U1, Verletzungsgefahr für den Monteur besteht.

Dies gilt auch dann, wenn sich im Betrieb zum Beispiel Reibbelagreste zwischen der Außenfläche der Tragplatte und der Unterseite der Blattfeder sammeln, sodass die Blattfeder nach oben (von der Außenfläche der Tragplatte weg) geführt wird, bis sie möglicherweise den genannten Hinterschnitt verläßt und sich unkontrolliert löst.

Schließlich besteht ein Problem darin, dass die Blattfeder, auch wenn sie auf einem Bremsbelag vormontiert ist, in der Werkstatt manuell gelöst werden kann, um sie zum Beispiel als Ersatzteil für einen bereits eingebauten Bremsbelag zu verwenden, dessen Blattfeder defekt oder zerstört ist. Dies kann dann vorkommen, wenn beim Austausch von Bremsbelägen eine bereits vorher benutzte Feder verwendet wird. Dabei besteht auch die Gefahr, dass eine falsche Blattfeder eingebaut wird.

In der DE 100 26 547 A1 wird ein Bremsbelag vorgeschlagen, bei dem die Blattfeder spannungsfrei zwischen korrespondierenden Ösen so gehalten wird, dass sie sich auch unter Last nicht selbsttätig lösen kann.

Weitere Merkmale zum technologischen Hintergrund gattungsgemäßer Bremsbeläge und zugehöriger Scheibenbremsen gibt der vorgenannte Stand der Technik, auf den insoweit Bezug genommen wird.

Bremsbeläge der genannten Art werden häufig mit einer Verschleißanzeige ausgerüstet. Diese wird in der Regel unter der Blattfeder im Bereich der Druckverteilerplatte angeordnet und ragt in den Verschleißbereich des Bremsbelages vor. Ist ein gewisser Verschleißgrad erreicht wird dieser Zustand angezeigt, sodass der Bremsbelag ausgewechselt werden kann.

Solche elektrischen Verschleißanzeigen werden über einen Stecker an die Bordelektronik angeschlossen. Jedes Fabrikat hat seinen eigenen Stecker. Die Bremsbeläge werden deshalb ohne die Verschleißsensoren ausgeliefert. Die Verschleißanzeigen werden erst in der Werkstatt nachgerüstet, je nach Fabrikat. Dazu müssen die Blattfedern demontiert werden.

Mit der Erfindung wird das Ziel verfolgt, die Ausrüstung gattungsgemäßer Bremsbeläge mit Verschleißanzeigen zu vereinfachen. Dabei verfolgt die Anmeldung das zusätzliche Ziel, diese Vereinfachung möglichst so zu gestalten, dass bekannte Systeme so wenig wie möglich umkonstruiert werden müssen.

Der dazu entwickelte Erfindungsgedanke ist relativ einfach: Bei den vorstehend beschriebenen Bremsbelägen nach dem Stand der Technik ist die Blattfeder jeweils beidseitig fixiert, entweder unter Zugbelastung im Bereich von Hinterschneidungen oder durch Druckbelastung in entsprechenden Sicken beziehungsweise spannungsfrei durch entsprechende Verbindung in Ösen.

Die beschriebene technische Aufgabe können die Blattfedern aber auch lösen, wenn sie nur einseitig "ortsfest" am Bremsbelag (der Tragplatte) befestigt sind, während das gegenüberliegende Ende lediglich "geführt" wird. Die "Führung" soll so erfolgen, dass die Blattfeder weder bei der Montage noch bei der anschließenden Anwendung so verrutschen kann, dass sie ihre Funktion verliert. Dazu genügt es aber im Prinzip, eine "umfangsseitige" Beweglichkeit für die Blattfeder (in Längsrichtung der Blattfeder) sicherzustellen und eine Maßnahme vorzusehen, damit die Blattfeder nicht senkrecht zur Längsrichtung des Bremsbelages rutschen kann.

Mit den Maßnahmen:
- schwenkbare Befestigung auf einer Seite
- Sicherung gegen Verrutschen auf der anderen Seite
wird die Möglichkeit geschaffen, zur Montage einer Verschleißanzeige die Blattfeder einfach "aufzuklappen". Dem Monteur steht dabei ausreichend Platz zur Verfügung, die Sicherungseinrichtung zu konfektionieren. Anschließend wird die Blattfeder zurückgeklappt.

Die Montage ist extrem einfach, schnell und preiswert. Sie bietet gleichzeitig einen hohen Sicherheitsstandard. Durch die drehbare Befestigung auf einer Seite wird die Blattfeder unverlierbar. Sie kann also nicht - wie im Stand der Technik - mit einer benutzten, defekten oder falschen Blattfeder vertauscht werden.

Die Bremsbeläge werden üblicherweise als Sets zu 4 Stück verpackt. Die Blattfedern sind dabei vormontiert. Sie werden erst zum Montagevorgang aus der Verpackung entnommen. Damit ist auch die Gefahr von Transportschäden oder Lagerschäden aufgrund der nur einseitigen Befestigung der Blattfeder sehr gering.

In ihrer allgemeinsten Ausführungsform umfasst die Erfindung einen Bremsbelag für eine Scheibenbremse, mit einem, auf einer Tragplatte angeordneten Reibbelag, und einer entlang einer radial außenliegenden Außenfläche der Tragplatte angeordneten, relativ zur Außenfläche der Tragplatte konvex gewölbten Blattfeder, wobei:
a) die Blattfeder an einem ersten Ende schwenkbar an der Tragplatte gefangen befestigt ist,
b) die Blattfeder an einem zweiten Ende in Axialrichtung der Blattfeder entlang der Außenfläche der Tragplatte verschiebbar, aber lose, angeordnet ist.

Dabei kann die Außenfläche der Tragplatte mit einer radial nach außen vorstehenden Öse ausgebildet sein, durch die die Blattfeder mit ihrem ersten Ende hindurchgreift. Es entsteht so eine Art "Ring in Ring"-Verbindung. Die Öse weist, senkrecht zum Verlauf des Reibbelages, eine Öffnung auf, durch die ein Abschnitt der Blattfeder verläuft, und zwar senkrecht zur Längserstreckung der Blattfeder.

An diesem Ende der Blattfeder kommt es darauf an, dass die Blattfeder, die an ihrem gegenüberliegendem Ende nicht fixiert ("gefangen") ist, verschwenkt werden kann. Insoweit sind auch beliebige andere Verbindungen zwischen Blattfeder und Bremsbelag (Tragplatte) möglich. So könnte die Blattfeder - quasi umgekehrt zum vorstehenden Beispiel - an diesem Ende nach Art einer Öse ausgebildet sein, durch die ein Stift hindurchgreift, der im Bereich der Tragplatte angeordnet ist.

Zwischen Blattfeder und Öse beziehungsweise zwischen den jeweiligen Anschlussteilen wird nur ein geringes Spiel bestehen, welches die Verschwenkbarkeit der Blattfeder ermöglicht.

Auch die Form der Öse ist praktisch beliebig. Sie kann nach Art eines Noppen gestaltet sein, der sich von der Außenfläche der Tragplatte erstreckt. Dabei kann die innere Begrenzungsfläche der Öse von der Außenseite der Tragplatte gebildet werden. Die Öse kann aber auch als diskretes Bauteil gestaltet sein, bestehend aus einem U-förmigen Element, dessen freie Schenkel in korrespondierenden Ausnehmungen in der Außenfläche der Tragplatte befestigt werden. Dabei können diese freien Schenkel der Öse (des Noppen mit Loch) in der Außenfläche der Tragplatte verrastet sein.

Am einfachsten ist eine Öse, die materialschlüssig mit der Tragplatte ausgebildet ist.

In diesem Fall wird für das erste Ende der Blattfeder folgende konstruktive Lösung angeboten: Das erste Ende kann unter Ausbildung randseitiger Streifen endseitig mit einem mittig verlaufenden Schlitz ausgebildet werden. Die freien Enden der Streifen sind dann mit einem senkrecht zur Längserstreckung der Blattfeder verlaufenden Sicherungselement verbindbar.

Dabei können die freien Enden der Streifen ringförmig aufgebogen werden, sodass das Sicherungselement sich durch die beiden ringförmigen Enden hindurcherstrecken kann.

Wenn als Sicherungselement ein sogenannter Schwerspannstift verwendet wird (in Form eines geschlitzten Rohres) spannt sich der Stift selbst, sobald er in die Öffnung eingeschlagen ist. Auf den beidseitig der Öse vorstehenden Enden des Stiftes werden dabei die aufgebogenen Streifen der Blattfeder geführt.

Alternativ zum Schwerspannstift kann auch ein Stift mit endseitigen Kragen verwendet werden. In diesem Fall kann der Stift lose in der Öffnung einliegen. Die Kragen des Stiftes müssen sich dann gegen korrespondierende äußere Stirnflächen der ringförmigen Enden der Sicherungselemente stützen.

Das zweite Ende der Blattfeder kann ebenfalls unter Ausbildung randseitiger Streifen mit einem mittig verlaufenden Schlitz ausgebildet werden. Dieser Schlitz dient dann praktisch als "Führungsnut" zusammen mit einem entsprechenden Führungssteg (Führungsabschnitt) im Bereich der Außenfläche der Tragplatte.

Dieser Abschnitt, der radial nach außen von der Außenfläche der Tragplatte vorsteht, hat keine andere Funktion als die der axialen Führung der Blattfeder am zweiten Ende. Seine Form ist deshalb beliebig. Es bietet sich aber an, und zwar sowohl aus Gründen der einfacheren Herstellung als auch aus optischen Gründen, diesen Abschnitt analog zu dem Befestigungsabschnitt am anderen Ende der Blattfeder zu gestalten, beispielsweise spiegelbildlich dort ebenfalls eine Öse anzuordnen (wenngleich das Loch der Öse an diesem zweiten Ende der Blattfeder keine Funktion hat).

Wie ausgeführt kann der Bremsbelag als solcher verwendet werden. Besonders vorteilhaft kann bei der erfindungsgemäßen Ausführungsform aber auch eine Verschleißanzeige unterhalb der Blattfeder im Bereich der Tragplatte befestigt werden. Dazu wird die Blattfeder einfach "aufgeklappt", der Sensor eingebaut und anschließend die Blattfeder wieder zurückgeklappt. Zu keinem Zeitpunkt kann die Blattfeder abgenommen oder ausgetauscht werden. Sie wird ständig an einem Ende "gefangen". Als weiteres wesentliches Merkmal der Erfindung gilt, dass - wie beim Gegenstand der DE 100 26 547 A1 - die Blattfeder im unbelasteten Zustand (also ohne Einwirkung des erwähnten Niederhalters) ohne Vorspannung geführt wird.

Weitere Merkmale der Erfindung ergeben sich aus den Merkmalen der Unteransprüche sowie den sonstigen Anmeldungsunterlagen. Dabei können einzelne Merkmale in beliebigen Variationen kombiniert werden, solange das Prinzip der Erfindung nicht verlassen wird.

Die Erfindung wird nachstehend anhand eines Ausführungsbeispieles näher beschrieben.

Dabei zeigen - jeweils in schematisierter Darstellung -
Figur 1: Einen Bremsbelag in perspektivischer Exposionsdarstellung,
Figur 2: Den Bremsbelag nach Figur 1 im vormontierten Zustand.

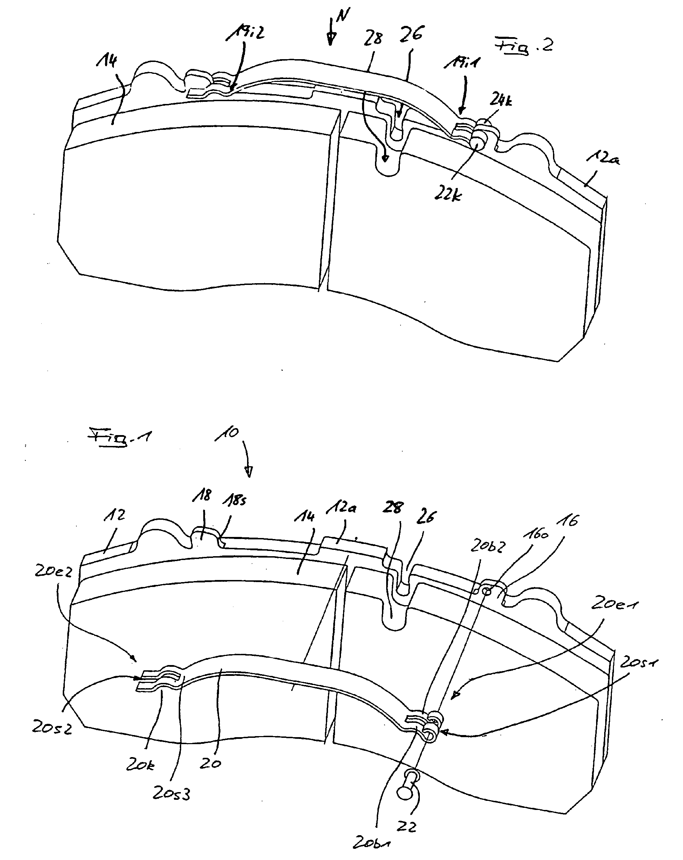

Figur 1 zeigt einen insgesamt mit dem Bezugszeichen 10 gekennzeichneten Bremsbelag mit einer Tragplatte 12 und einem darauf angeordneten Reibbelag 14.

Der Bremsbelag 10 ist in seinem (späteren) Einbauzustand dargestellt. Entlang einer dann radial außen liegenden (in der Figur: oberen) Außenfläche 12a ist die Tragplatte 12 mit zwei, beabstandet zueinander angeordneten Vorsprüngen 16, 18 ausgebildet, die über benachbarte Abschnitte der Außenfläche 12a nach oben vorragen. Die Abschnitte 16, 18 sind einteilig mit der Tragplatte 12. Der in den Figuren rechte Vorsprung 16 weist eine Öffnung 16o auf; er hat dadurch die Form einer Öse beziehungsweise eines Rings. Der linke Vorsprung 18 ist "geschlossen"; er hat hier die Form eines Steges.

Figur 1 zeigt weiter eine Blattfeder 20, die im Bezug auf die Außenfläche 12a der Tragplatte 12 konvex geformt ist. Endseitig ist die Blattfeder 20 jeweils mit einem mittigen, zum freien Ende hin offenen Schlitz 20s1, 20s2 ausgebildet. An einem ersten Ende 20e1 sind die benachbarten Streifen 20b1, 20b2 ringförmig umgebogen.

Am anderen (zweiten) Ende 20e2 laufen die Streifen 20b1, 20b2, abgesehen von einer kleinen Krümmung 20k, frei aus.

Mit Abstand vor den Schlitzen 20s1, 20s2 ist die Blattfeder 20 beidseitig mit einer Ausbuchtung 19i1, 19i2 in Richtung auf die Außenfläche 12a der Tragplatte 12 gestaltet. Mit diesen Abschnitten liegt die Blattfeder 20 auf der Außenfläche 12a auf.

Zur Montage der Blattfeder 20 auf der Tragplatte 12 wird die Blattfeder 20 mit ihrem Ende 20e1 über die Öse 16 geführt, bis die schlaufenförmig umgebogenen Streifen 20b 1, 20b2 vor beziehungsweise hinter der Öffnung 16o liegen.

Anschließend wird eine Niete mit einem verdickten Kopf 22k durch die schlaufenförmigen Abschnitte der Streifen 20b1, 20b2 geführt und von der anderen Seite unter Form- und Kraftschluss unter Ausbildung eines Gegenkopfes 24k vernietet (wobei sich die Köpfe 22k, 24k gegen die äußeren Flächen der schlaufenförmigen Enden der Streifen 20b1, 20b2 abstützen.

Am zweiten Ende 20e2 übergreift die Blattfeder 20 den Steg 18 beidseitig. Dadurch wird ein Abrutschen der Feder 20 senkrecht zur Tragplatte 12 vermieden. Im dargestellten unbelasteten Zustand liegt das innere Ende 20s3 des Schlitzes 20s2 im Abstand zur korrespondierenden Fläche 18s des Steges 18. Dieser Abstand entspricht der Strecke, um die die Feder 20 auf der Außenfläche 12a der Tragplatte 12 unter Last (→ N) in axialer Richtung der Blattfeder 20 gleiten kann.

Die Figur zeigt ferner im Bereich der Tragplatte 12 und - mehr oder weniger fluchtend dazu - radial nach innen verlaufende Vertiefungen 26, 28, und zwar im Bereich zwischen den Vorsprüngen 16, 18, damit also unterhalb der Blattfeder 20 im montierten Zustand.

Diese schlitzartigen Vertiefungen 26, 28 dienen der Aufnahme einer elektrischen Reststärkeanzeige für den Bremsbelag 14. Ein Halteteil des (nicht dargestellten) Sensors wird in der Vertiefung 26 verankert, ein Teil ragt in die Vertiefung 28 ein Stück vor.

Zur Montage des Sensors wird die Blattfeder 20 um ihr erstes Ende verschwenkt, was aufgrund der losen Führung am gegenüberliegenden zweiten Ende problemlos möglich ist. Damit wird die Montage des Verschleißsensors gegenüber dem Stand der Technik erheblich erleichtert. Gleichzeitig bleibt die Blattfeder 20 am ersten Ende "gefangen".

Nach der Montage des Sensors wird die Blattfeder wieder in die in Figur 2 dargestellte Position zurückgeschwenkt.

## Patentansprüche

1. Bremsbelag (10) für eine Scheibenbremse, mit einem auf einer Tragplatte (12) angeordneten Reibbelag (14) und einer entlang einer radial außen liegenden Außenfläche (12a) der Tragplatte (12) angeordneten, relativ zur Außenfläche (12a) der Tragplatte (12) konvex gewölbten Blattfeder (20), **gekennzeichnet durch** folgende Merkmale:
a) die Blattfeder (20) ist an einem ersten Ende (20e1) schwenkbar an der Tragplatte (12) gefangen befestigt,
b) die Blattfeder (20) ist an einem zweiten Ende (20e2) in Axialrichtung der Blattfeder (20), entlang der Außenfläche (12a) der Tragplatte (12) verschiebbar, aber lose, angeordnet.

2. Bremsbelag nach Anspruch 1, bei dem die Außenfläche (12a) der Tragplatte (12) mit einer radial nach außen vorstehenden Öse (16) ausgebildet ist, durch die die Blattfeder (20) mit ihrem ersten Ende (20e1) hindurchgreift.

3. Bremsbelag nach Anspruch 1, bei dem das erste Ende (20e1) der Blattfeder (20) mit geringem Spiel eine Öse (16) durchgreift.

4. Bremsbelag nach Anspruch 1, bei dem eine innere Begrenzungsfläche einer Öse (16) von der Außenfläche (12a) der Tragplatte (12) gebildet wird.

5. Bremsbelag nach Anspruch 1, bei dem eine Öse (16) von einem U-förmigen Element gebildet wird, dessen freie Schenkel in korrespondierenden Ausnehmungen in der Außenfläche der Tragplatte befestigt sind.

6. Bremsbelag nach Anspruch 5, bei dem die freien Schenkel der Öse in der Außenfläche der Tragplatte verrastet sind.

7. Bremsbelag nach Anspruch 1, bei dem eine Öse (16) materialschlüssig mit der Tragplatte (12) ausgebildet ist.

8. Bremsbelag nach Anspruch 1, bei dem das erste Ende (20e1) der Blattfeder (20) unter Ausbildung randseitiger Streifen (20b1, 20b2) mit einem mittig verlaufenden Schlitz (20s1, 20s2) ausgebildet ist und die freien Enden der Streifen (20s1, 20s2) mit einem senkrecht zur Längserstreckung der Blattfeder (20) verlaufenden Sicherungselement (22) verbindbar sind.

9. Bremsbelag nach Anspruch 8, bei dem die freien Enden der Streifen (20b1, 20b2) ringförmig aufgebogen sind, das Sicherungselement (22) sich durch die beiden ringförmigen Enden hindurch erstreckt und außenseitig mit jeweils einem Kragen (22k, 24k) ausgebildet ist, der sich gegen eine korrespondierende äußere Stirnfläche der ringförmigen Enden abstützt.

10. Bremsbelag nach Anspruch 8 oder 9, bei dem das Sicherungselement ein Schwerspannstift ist.

11. Bremsbelag nach Anspruch 1, bei dem das zweite Ende (20e2) der Blattfeder (20) unter Ausbildung randseitiger Streifen (20b1, 20b2) mit einem mittig verlaufenden Schlitz (20s1, 20s2) ausgebildet ist.

12. Bremsbelag nach Anspruch 1 mit einem radial nach außen von der Außenfläche (12a) der Tragplatte (12) vorstehenden Abschnitt (18) zur axialen Führung der Blattfeder (20) am zweiten Ende (20e2).

13. Bremsbelag nach Anspruch 12, dessen vorstehender Abschnitt (18) als Öse gestaltet ist.

## Claims

1. Brake lining (10) for a disc brake, with a friction lining (14), which is disposed on a support plate (12), and a leaf spring (20) disposed along a radially outer external surface (12a) of the support plate (12) and arched in a convex manner relative to the external surface (12a) of the support plate (12), wherein:
a) the leaf spring (20) is pivotably fastened to the support plate (12) at a first end (20e1) in a captive manner,
b) the leaf spring (20) is disposed at a second end (20e2) such that it can be displaced in the axial direction of the leaf spring (20) along the external surface (12a) of the support plate (12), but loosely.

2. Brake lining according to Claim 1, in which the external surface (12a) of the support plate (12) is formed with an eye (16) which projects radially outwards and through which the leaf spring (20) reaches by way of its first end (20e1).

3. Brake lining according to Claim 1, in which the first end (20e1) of the leaf spring (20) reaches through an eye (16) with a small clearance.

4. Brake lining according to Claim 1, in which an inner boundary surface of an eye (16) is formed by the external surface (12a) of the support plate (12).

5. Brake lining according to Claim 1, in which an eye (16) is formed by a U-shaped element whose free legs are fastened in corresponding recesses in the external surface of the support plate.

6. Brake lining according to Claim 5, in which the free legs of the eye are locked in the external surface of the support plate.

7. Brake lining according to Claim 1, in which an eye (16) is formed integrally with the support plate (12).

8. Brake lining according to Claim 1, in which the first end (20e1) of the leaf spring (20) is formed with a centrally extending slot (20s1, 20s2), while forming edge strips (20b1, 20b2), and the free ends of the strips (20s1, 20s2) can be connected to a securing element (22) extending perpendicularly to the longitudinal extent of the leaf spring (20).

9. Brake lining according to Claim 8, in which the free ends of the strips (20b1, 20b2) are bent up in an annular manner, the securing element (22) extends through the two annular ends and is formed on the outside with a respective collar (22k, 24k) which is supported against a corresponding outer front face of the annular ends.

10. Brake lining according to Claim 8 or 9, in which the securing element is a roll pin.

11. Brake lining according to Claim 1, in which the second end (20e2) of the leaf spring (20) is formed with a centrally extending slot (20s1, 20s2), while forming edge strips (20b1, 20b2).

12. Brake lining according to Claim 1 with a portion (18), which projects radially outwards from the external surface (12a) of the support plate (12), for axially guiding the leaf spring (20) at the second end (20e2).

13. Brake lining according to Claim 12, the projecting portion (18) of which is configured as an eye.

## Revendications

1. Garniture de frein (10) pour un frein à disques, avec une garniture de frottement (14) disposée sur une plaque support (12) et un ressort à lame (20), disposé le long d'une surface extérieure (12a), située radialement à l'extérieur, de la plaque support (12) et incurvée de façon convexe par rapport à la surface extérieure (12a) de la plaque support (12), **caractérisée par** les caractéristiques suivantes :
a) le ressort à lame (20) est fixé et réceptionné sur une première extrémité (20e1) de façon basculante sur la plaque support (12),
b) le ressort à lame (20) est disposé sur une seconde extrémité (20e2) dans le sens axial du ressort à lame (20), coulissant le long de la surface extérieure (12a) de la plaque support (12), mais libre.

2. Garniture de frein selon la revendication 1, sur laquelle la surface extérieure (12a) de la plaque support (12) est conçue avec un anneau (16) dépassant radialement vers l'extérieur, à travers lequel s'engage le ressort à lame (20) avec sa première extrémité (20e1).

3. Garniture de frein selon la revendication 1, sur laquelle la première extrémité (20e1) du ressort à lame (20) traverse un anneau (16) avec un faible jeu.

4. Garniture de frein selon la revendication 1, sur laquelle une surface de délimitation intérieure d'un anneau (16) est formée par la surface extérieure (12a) de la plaque support (12).

5. Garniture de frein selon la revendication 1, sur laquelle un anneau (16) est formé par un élément en U, dont les branches libres sont fixées dans des évidements correspondants dans la surface extérieure de la plaque support.

6. Garniture de frein selon la revendication 5, sur laquelle les branches libres de l'anneau sont encliquetées dans la surface extérieure de la plaque support.

7. Garniture de frein selon la revendication 1, sur laquelle un anneau (16) est conçu par adhésion de matière avec la plaque support (12).

8. Garniture de frein selon la revendication 1, sur laquelle la première extrémité (20e1) du ressort à lame (20) est réalisée en formant des bandes (20b1, 20b2) côté bordure avec une fente (20s1, 20s2) agencée au centre et les extrémités libres des bandes (20s1, 20s2) peuvent être reliées à un élément de blocage (22) agencé perpendiculairement à l'extension longitudinale du ressort à lame (20).

9. Garniture de frein selon la revendication 8, sur laquelle les extrémités libres des bandes (20b1, 20b2) sont pliées en forme de bague, l'élément de blocage (22) s'étend à travers les deux extrémités de forme annulaire et est réalisé côté extérieur avec à chaque fois une collerette (22k, 24k), qui s'appuie contre une surface frontale extérieure correspondante des extrémités annulaires.

10. Garniture de frein selon la revendication 8 ou 9, sur laquelle l'élément de blocage est une broche de serrage lourde.

11. Garniture de frein selon la revendication 1, sur laquelle la seconde extrémité (20e2) du ressort à lame (20) est réalisée en formant des bandes (20b1, 20b2) côté bordure avec une fente (20s1, 20s2) agencée au centre.

12. Garniture de frein selon la revendication 1, avec une partie (18), dépassant radialement vers l'extérieur de la surface extérieure (12a) de la plaque support (12), pour le guidage axial du ressort à lame (20) sur la seconde extrémité (20e2).

13. Garniture de frein selon la revendication 12, dont la partie (18) saillante est conçue comme anneau.
